# EUROPÄISCHE PATENTSCHRIFT

(11) **EP 0 502 308 B1**
(45) Veröffentlichungstag und Bekanntmachung des Hinweises auf die Patenterteilung: **27.07.1994**
(21) Anmeldenummer: 92101236.5
(22) Anmeldetag: 27.01.1992
(51) Int. Cl.: A01C 7/08, A01C 15/04

(54) **Pneumatische Sämaschine**
Pneumatic seeder
Semoir pneumatique

(30) Priorität: 02.03.1991 DE 9102533 U
(43) Veröffentlichungstag der Anmeldung: 09.09.1992
(73) Patentinhaber: Rabewerk GmbH + Co., 49152 Bad Essen (DE)
(72) Erfinder: Gerdom, Friedrich, Dipl.-Ing., W-4515 Bad Essen (DE)
(74) Vertreter: Missling, Arne, Dipl.-Ing.

(56) Entgegenhaltungen:
- EP-A- 0 252 348
- EP-A- 0 309 608
- EP-A- 0 369 766
- AU-B- 471 659

## Beschreibung

Die Erfindung bezieht sich auf eine pneumatische Sämaschine mit einem Behälter zur Aufnahme von Saatgut, einem Dosierrad, einem Gebläse, dessen Auslaß über eine Düse mit einem mit zumindest einer Luftzutrittsöffnung versehenen Zulaufraum unterhalb des Dosierrades mündet und einem sich von dem Zulaufraum aus erstreckenden, mit einem Verteilerkopf versehenen Steigrohr.

Beim Einsatz von Sämaschinen besteht generell das Problem, daß diese auch unter ungünstigen Witterungsbedingungen voll funktionsfähig sein müssen. Dabei erweist es sich insbesondere bei pneumatischen Sämaschinen als ungünstig, wenn Trockenheit herrscht, da dann bei dem Sävorgang viel Staub entwickelt wird, insbesondere wenn die Sämaschine mit einer zapfwellenangetriebenen Bodenbearbeitungsmaschine kombiniert oder an dieser aufgebaut ist. Das sich hierbei ergebende Problem besteht darin, daß pneumatische Sämaschinen der bekannten Bauweisen an verschiedenen Stellen Außenluft ansaugen, beispielsweise über das Gebläse, zur Belüftung des Behälterinnenraumes oder zur Luftzufuhr zu dem Zulaufraum, in welchen durch die Injektionsdüse Luft zugeleitet und von dem Dosierrad Saatgut abgegeben wird. Abgesehen von der Gefahr, daß sich in dem Zulaufraum größere Staubmengen ansammeln, welche den Sävorgang stören können, kann sich auch in dem Innenraum des Behälters eine mit abnehmender Saatgutmenge zunehmende Staubmenge ansammeln. Dies ist insbesondere dann besonders nachteilig, wenn Feinsaatgut, beispielsweise Raps verarbeitet wird. Der relativ hohe Staubanteil führt insbesondere bei geringen Restmengen des Saatgutes zu einer erheblichen Verfälschung der ausgebrachten Saatgutmenge.

Ein weiterer Nachteil ergibt sich, wenn das Saatgut zusammen mit dem angesaugten Staub in die Saatleitungen gelangt, da das Saatgut möglicherweise wieder in den Behälter rückzirkuliert wird, beispielsweise wenn Fahrgassenschaltungen benutzt werden.

Eine pneumatische Sämaschine der eingangs genannten Art ist beispielsweise aus der EP-A2-309 608 vorbekannt.

Der Erfindung liegt die Aufgabe zugrunde, eine pneumatische Sämaschine der eingangs genannten Art zu schaffen, welche bei einfachem Aufbau und einfacher, betriebssicherer Handhabbarkeit das Eindringen von Staub vermeidet.

Erfindungsgemäß wird die Aufgabe dadurch gelöst, daß in dem Behälter 1 ein Überdruck aufgebaut wird.

Die erfindungsgemäße Sämaschine zeichnet sich durch eine Reihe erheblicher Vorteile aus. Durch den Überdruck in dem Saatgutbehälter wird vermieden, daß Außenluft und damit Staub ungefiltert in den Behälter eindringen können. Da eine Belüftung des Behälters in jedem Falle erforderlich ist, um das Austreten des Saatgutvolumens zu ersetzen, können diese Volumina durch den Überdruck ausgeglichen werden, ohne daß Umgebungsluft zusammen mit Staub eingesaugt wird.

In einer besonders vorteilhaften Ausgestaltung der Erfindung ist vorgesehen, daß der Auslaßkanal des Gebläses über eine Druckluftleitung mit dem Innenraum des Behälters verbunden ist. Es ist somit möglich, einen Teil der unter höherem Druck stehendem, von dem Gebläse geförderten Luftmenge in den Innenraum des Behälters zu leiten. Da zur Erzeugung eines Überdrucks in dem Behälter nur relativ wenig Luftvolumen erforderlich ist, wird die restliche Funktionsweise der Sämaschine nicht beeinflußt, so daß keine Veränderungen an einem üblichen Gebläse vorgenommen werden müssen. Besonders günstig ist bei dieser Ausgestaltungsform, daß der Ansaugbereich des Gebläses so plaziert werden kann, daß ein Eindringen von Staub weitgehend ausgeschlossen ist. Weiterhin besteht auch die zusätzliche Möglichkeit, im Ansaugbereich des Gebläses ein Filterelement anzuordnen, um größere Staubpartikel abzuhalten.

Die Druckluftleitung ist bevorzugterweise im Bereich des höchsten Druckes an dem Auslaßkanal angeschlossen, beispielsweise zu Beginn des Bereiches, in welchem sich der Querschnitt zum Übergang zu der Injektordüse verringert.

Weiterhin ist es vorteilhaft, wenn die Druckluftleitung oberhalb des höchstmöglichen Standes des Saatgutes in den Behälter mündet, da dann Beeinflussungen des Saatgutes durch die ausströmende Druckluft vermieden werden.

Um zu verhindern, daß durch den durch die Düse erzeugten Unterdruck Staub in den Zulaufraum, in welchen das Dosierrad Saatgut abgibt, eingesaugt wird, erweist es sich als besonders günstig, wenn die Luftzutrittsöffnung mit einer Ansaugleitung verbunden ist, deren Einlaßöffnung im oberen Bereich der Sämaschine angeordnet ist. Die Einlaßöffnung der Ansaugleitung kann so plaziert werden, daß ein Eindringen von Staub weitgehend ausgeschlossen ist.

Alternativ hierzu ist es auch möglich, die Luftzutrittsöffnung zu dem Zulaufraum zur Zuführung von Druckluft direkt mit dem Auslaßkanal des Gebläses zu verbinden. Es wird somit eine ausreichende Luftmenge in den Zulaufraum eingeleitet, das Einsaugen von Umgebungsluft und Staub wird gänzlich vermieden.

Um zu vermeiden, daß das Gebläse selbst in unkontrollierter Weise Staub mit der Außenluft ansaugt, kann es besonders günstig sein, wenn das Gebläse mit einem Ansaugkanal verbunden ist, dessen Einlaßöffnung im oberen Bereich der Sämaschine angeordnet ist.

Der Ansaugkanal, die Ansaugleitung und/oder die Druckluftleitung können als flexible Schläuche ausgebildet sein. Weiterhin ist es möglich, bestehende Sämaschinen in einfachster Weise in der beschriebenen Art nachzurüsten.

Im folgenden wird die Erfindung anhand eines Ausführungsbeispieles in Verbindung mit der Zeichnung beschrieben. Dabei zeigt:

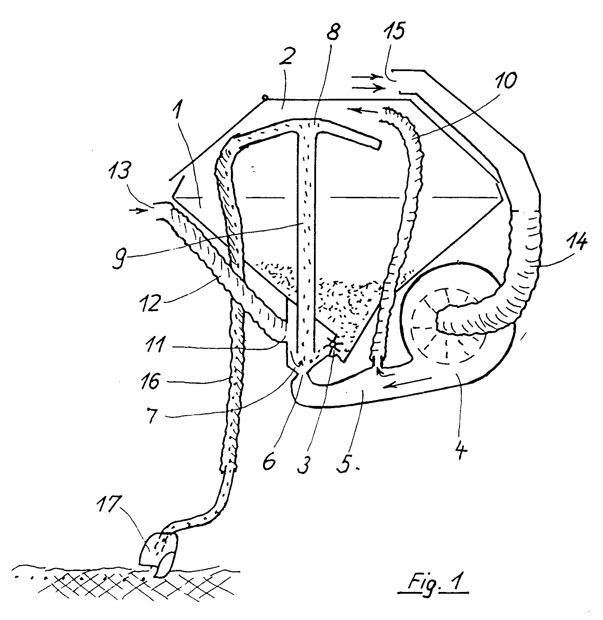

Fig. 1 eine schematische Seitenansicht, teils im Schnitt, einer erfindungsgemäßen pneumatischen Sämaschine.

Die pneumatische Sämaschine umfaßt in üblicher Weise einen Behälter 1, in welchen Saatgut eingefüllt werden kann. Der Behälter 1 ist im wesentlichen trichterförmig ausgebildet und mittels eines Deckels 2 verschließbar. Im Bodenbereich des Behälters 1 ist ein Dosierrad 3 angeordnet, welches in üblicher Weise antreibbar ist. Unterhalb des Behälters 1 bzw. im Ausgabebereich des Dosierrades 3 ist ein Zulaufraum 7 vorgesehen, in welchen eine Düse 6 mündet, welche über einen Auslaßkanal 5 eines Gebläses 4 mit Druckluft beaufschlagt wird, um in dem Zulaufraum 7 einen Unterdruck zu erzeugen. Durch diese Saugwirkung wird das Saatgut über ein Steigrohr 9 einem Verteilerkopf 8 zugeführt. An dem Verteilerkopf 8 sind Schlauchleitungen 16 angeschlossen, welche in üblicher Weise zu Säscharen 17 führen.

Erfindungsgemäß ist am Auslaßkanal 5 eine Druckluftleitung 10 angeschlossen, welche sich in den oberen Innenbereich des Behälters 1 erstreckt und dort mündet, so daß ein Teil der aus dem Gebläse 4 abgegebenen Luft in den Innenraum des Behälters eingeleitet wird, um dort einen Überdruck zu erzeugen. Die Druckluftleitung 10 ist an einem Bereich des höchsten Druckes des Auslaßkanals 5 angeschlossen, beispielsweise an einem Bereich, an welchem sich der Querschnitt des Auslaßkanals verjüngt.

Systembedingt ist es erforderlich, in den Zulaufraum 7 eine gewisse Luftmenge einzuleiten, um das Saatgut in das Steigrohr 9 transportieren zu können. Zu diesem Zwecke weist die Wandung des Zulaufraumes 7 zumindest eine Luftzutrittsöffnung 11 auf. Diese ist mit einer Ansaugleitung 12 verbunden, deren Einlaßöffnung 13 am oberen Bereich der Sämaschine angeordnet ist. Es wird somit vermieden, daß durch die Luftzutrittsöffnung 11 Staub angesaugt wird.

Weiterhin ist das Gebläse 4 mit einem Ansaugkanal 14 verbunden, dessen Einlaßöffnung 15 ebenfalls im oberen Bereich der Sämaschine angeordnet ist. Auch auf diese Weise wird das unerwünschte Eintreten von Staubpartikeln in das Gebläse 4 vermieden.

Die Erfindung ist nicht auf das gezeigte Ausführungsbeispiel beschränkt, vielmehr ergeben sich für den Fachmann im Rahmen der Ansprüche vielfältige Abwandlungs- und Modifikationsmöglichkeiten.

## Patentansprüche

1. Pneumatische Sämaschine mit einem Behälter (1) zur Aufnahme von Saatgut, einem Dosierrad (3), einem Gebläse (4), dessen Auslaßkanal (5) über eine Düse (6) in einem mit zumindest einer weiteren Luftzutrittsöffnung (11) versehenen Zulaufraum (7) unterhalb des Dosierrades (3) mündet, und einem sich von dem Zulaufraum (7) aus erstrekkenden, mit einem Verteilerkopf (8) versehenen Steigrohr, dadurch gekennzeichnet, daß der Innenraum des Behälters (1) mit einer Überdruckquelle derart verbunden ist, daß dort ein Überdruck erzeugt wird.

2. Sämaschine nach Anspruch 1, dadurch gekennzeichnet, daß der Auslaßkanal (5) über eine Druckluftleitung (10) mit dem Innenraum des Behälters (1) verbunden ist.

3. Sämaschine nach Anspruch 1 oder 2, dadurch gekennzeichnet, daß die Druckluftleitung (10) im Bereich des höchsten Drucks an dem Auslaßkanal (5) angeschlossen ist.

4. Sämaschine nach einem der Ansprüche 1 bis 3, dadurch gekennzeichnet, daß die Druckluftleitung (10) in den oberen Bereich des Behälters (1) mündet.

5. Sämaschine nach einem der Ansprüche 1 bis 4, dadurch gekennzeichnet, daß die weitere Luftzutrittsöffnung (11) mit einer Ansaugleitung (12) verbunden ist, deren Einlaßöffnung (13) im oberen Bereich der Sämaschine angeordnet ist.

6. Sämaschine nach einem der Ansprüche 1 bis 4, dadurch gekennzeichnet, daß die weitere Luftzutrittsöffnung (11) zur Druckluftzufuhr mit dem Auslaßkanal (5) des Gebläses (4) verbunden ist.

7. Sämaschine nach einem der Ansprüche 1 bis 6, dadurch gekennzeichnet, daß das Gebläse (4) mit einem Ansaugkanal (14) verbunden ist, dessen Einlaßöffnung (15) im oberen Bereich der Sämaschine angeordnet ist.

8. Sämaschine nach einem der Ansprüche 1 bis 7, dadurch gekennzeichnet, daß der Ansaugkanal (14), die Ansaugleitung (12) und/oder die Druckluftleitung (10) als flexible Schläuche ausgebildet sind.

## Claims

1. A pneumatic sowing machine having a receptacle (1) for receiving seed, a metering wheel (3), a blower (4) whose outlet channel (5) issues - via a nozzle (6) - in a feed chamber (7) which is located below the metering wheel (3) and is provided with at least one additional air admission opening (11), and having an ascending pipe which extends from the feed chamber (7) and is provided with a distributing head (8), characterised in that the interior space of the receptacle (1) is connected to a source of excess pressure in such a manner that an excess pressure is produced there.

2. A sowing machine in accordance with Claim 1, characterised in that the outlet channel (5) is connected to the interior space of the receptacle (1) via a compressed-air line (10).

3. A sowing machine in accordance with Claim 1 or 2, characterised in that the compressed-air line (10) is attached to the outlet channel (5) in the region of highest pressure.

4. A sowing machine in accordance with any one of Claims 1 to 3, characterised in that the compressed-air line (10) issues into the upper region of the receptacle (1).

5. A sowing machine in accordance with any one of Claims 1 to 4, characterised in that the additional air admission opening (11) is connected to a suction line (12) whose inlet opening (13) is arranged in the upper region of the sowing machine.

6. A sowing machine in accordance with any one of Claims 1 to 4, characterised in that the additional air admission opening (11) is - for the purpose of supplying compressed air - connected to the outlet channel (5) of the blower (4).

7. A sowing machine in accordance with any one of Claims 1 to 6, characterised in that the blower (4) is connected to a suction channel (14) whose inlet opening (15) is arranged in the upper region of the sowing machine.

8. A sowing machine in accordance with any one of Claims 1 to 7, characterised in that the suction channel (14), the suction line (12) and/or the compressed-air line (10) are in the form of flexible hoses.

## Revendications

1. Semoir pneumatique, comportant un récipient (1) pour recevoir la semence, une roue doseuse (3), une soufflante (4), dont le canal de sortie (5) débouche, en-dessous de la roue doseuse (3), par une buse (6), dans une chambre d'alimentation (7) munie d'au moins un autre orifice d'arrivée d'air (11), et un tube montant, partant de la chambre d'alimentation (7) et muni d'une tête de répartition (8), caractérisé en ce que le volume intérieur du récipient (1) est relié à une source de surpression de façon à créer à cet endroit une surpression.

2. Semoir suivant la revendication 1, caractérisé en ce que le canal de sortie (5) est relié, par l'intermédiaire d'une conduite d'air comprimé (10), au volume intérieur du récipient (1).

3. Semoir suivant la revendication 1 ou la revendication 2, caractérisé en ce que la conduite d'air comprimé (10) est raccordée au canal de sortie (5) dans la zone où la pression est la plus forte.

4. Semoir suivant l'une quelconque des revendications 1 à 3, caractérisé en ce que la conduite d'air comprimé (10) débouche à la partie supérieure du récipient (1).

5. Semoir suivant l'une quelconque des revendications 1 à 4, caractérisé en ce que l'autre orifice d'arrivée d'air (11) est relié à une conduite d'aspiration (12), dont l'orifice d'entrée (13) est disposé à la partie supérieure du semoir.

6. Semoir suivant l'une quelconque des revendications 1 à 4, caractérisé en ce que l'autre orifice d'arrivée d'air (11) est relié, pour l'arrivée d'air comprimé, au canal de sortie (5) de la soufflante (4).

7. Semoir suivant l'une quelconque des revendications 1 à 6, caractérisé en ce que la soufflante (4) est reliée à un canal d'aspiration (14), dont l'orifice d'entrée (15) est disposé à la partie supérieure du semoir.

8. Semoir suivant l'une quelconque des revendications 1 à 7, caractérisé en ce que le canal d'aspiration (14), la conduite d'aspiration (12) et/ou la conduite d'air comprimé (10), sont réalisés sous la forme de tubes flexibles.
